# EUROPÄISCHE PATENTSCHRIFT

(11) **EP 3 487 717 B1**
(45) Veröffentlichungstag und Bekanntmachung des Hinweises auf die Patenterteilung: **16.03.2022**
(21) Anmeldenummer: 17740754.1
(22) Anmeldetag: 19.07.2017
(51) Int. Cl.: B60D 1/145, B60D 1/58, B60R 9/06, B60R 11/04, G08G 1/017, G08G 1/054

(54) **GEHÄUSE FÜR EIN MOBILES VERKEHRSÜBERWACHUNGSGERÄT UND VERKEHRSÜBERWACHUNGSSYSTEM**
HOUSING FOR A MOBILE TRAFFIC MONITORING DEVICE AND TRAFFIC MONITORING SYSTEM
BOÎTIER POUR APPAREIL MOBILE DE SURVEILLANCE DU TRAFIC ET SYSTÈME DE SURVEILLANCE DU TRAFIC

(30) Priorität: 20.07.2016 DE 102016113367
(43) Veröffentlichungstag der Anmeldung: 29.05.2019
(73) Patentinhaber: Jenoptik Robot GmbH, 40789 Monheim (DE)
(72) Erfinder: LEHNING, Michael, 31137 Hildesheim (DE); MAAG, Einar, 42659 Solingen (DE)
(74) Vertreter: Waldauf, Alexander
(86) Internationale Anmeldenummer: PCT/EP2017/068225
(87) Internationale Veröffentlichungsnummer: WO 2018/015432

(56) Entgegenhaltungen:
- DE-U1- 20 015 146
- US-A- 5 231 393
- US-A1- 2003 025 791
- US-A1- 2009 152 314
- US-A1- 2009 237 271
- US-A1- 2009 244 279

## Beschreibung

Die Erfindung geht aus von einer Vorrichtung nach Gattung der unabhängigen Ansprüche.

Die US 5 231 393 offenbart einen Anhänger auf Rädern mit einem Verkehrsüberwachungsgerät. Die US 2003/025791 A1 offenbart einen Trailer mit höhenverstellbaren Füßen.

Um ein Verkehrsüberwachungsgerät in ein Fahrzeug zu integrieren, sind aufwendige Umbaumaßnahmen erforderlich. Beispielsweise kann ein Austausch der Heckscheibe erforderlich sein, da metallbedampfte Heckscheiben eine zu geringe Durchlässigkeit für elektromagnetische Wellen aufweisen.

Vor diesem Hintergrund werden mit dem hier vorgestellten Ansatz ein Verkehrsüberwachungssystem mit Gehäuse gemäß dem Hauptanspruch vorgestellt. Durch die in den abhängigen Ansprüchen aufgeführten Maßnahmen sind vorteilhafte Weiterbildungen und Verbesserungen des Gehäuses möglich.

Es wird Verkehrsüberwachungssystem mit Gehäuse vorgestellt, wobei das Gehäuse über eine Befestigungsschnittstelle mit einem Trägerfahrzeug koppelbar ist und wobei das Gehäuse als Gepäcktransportkoffer ausgeführt ist.

Unter einem Verkehrsüberwachungsgerät kann ein elektronisches Gerät zum Erfassen und Dokumentieren von Regelverstößen im Straßenverkehr verstanden werden. Das Verkehrsüberwachungsgerät kann zumindest einen Sensor zum Erfassen zumindest eines Fahrzeugs, eine Ansteuerungselektronik und eine Dokumentationseinheit umfassen. Unter einem Gepäcktransportkoffer kann ein quaderförmiges, mit einem Deckel versehenes, öffen- und verschließbares Behältnis verstanden werden. Eine Befestigungsschnittstelle kann als lösbare Kupplung bezeichnet werden.

Die Befestigungsschnittstelle weist eine Aufnahmeeinrichtung für eine Anhängerkupplung des Trägerfahrzeugs auf. Viele Fahrzeuge weisen eine Anhängerkupplung auf beziehungsweise sie ist einfach nachrüstbar. Die Aufnahmeeinrichtung ist für einen Formschluss und/oder Reibschluss zu einem genormten Kugelkopf der Anhängerkupplung ausgebildet sein.

Die Befestigungsschnittstelle kann eine Aufnahmeeinrichtung für eine Dachträgerschnittstelle des Trägerfahrzeugs aufweisen. Viele Fahrzeuge weisen Anschraubpunkte im Dachbereich und/oder eine Dachreling auf. Die Aufnahmeeinrichtung kann wie ein Dachträger ausgebildet sein.

Die Befestigungsschnittstelle kann eine Aufnahmeeinrichtung für eine Anbaueinrichtung des Trägerfahrzeugs aufweisen. Eine Anbaueinrichtung kann eine Anbauplatte oder ein Geräteträger sein. Beispielsweise kann die Anbaueinrichtung auch eine Aufnahme für eine abnehmbare Anhängerkupplung oder einen Schneepflug sein. Die Anbaueinrichtung kann an einer Fahrzeugfront des Trägerfahrzeugs angeordnet sein. Dadurch kann das Gehäuse mit dem Verkehrsüberwachungsgerät auch vorne am Trägerfahrzeug angebaut werden.

Zwischen der Befestigungsschnittstelle und dem Gehäuse kann eine Höhenverstellungseinrichtung angeordnet sein. Eine Höhenverstellungseinrichtung kann zum Anheben und Absenken des Gehäuses verwendet werden. Durch die Höhenverstellungseinrichtung kann das Gehäuse einfach am Trägerfahrzeug montiert oder vom Trägerfahrzeug abmontiert werden.

Zwischen der Befestigungsschnittstelle und dem Gehäuse kann eine Schwenkeinrichtung angeordnet sein. Eine Schwenkeinrichtung kann zum Verschwenken um eine oder zwei Achsen verwendet werden. Durch das Verschwenken kann ein Erfassungsbereich des Verkehrsüberwachungsgeräts ausgerichtet werden.

Das Gehäuse weist höhenverstellbare Füße auf . Durch verstellbare Füße können Bodenunebenheiten ausgeglichen werden. Verstellbare Füße können im angekoppelten Zustand angehoben werden, um Kontakt zum Boden zu vermeiden.

Das Gehäuse weist Transportrollen auf. Transportrollen können Lenkrollen oder Bockrollen sein. Auf Transportrollen kann das abgekoppelte Gehäuse einfach bewegt werden. Die Transportrollen können feststellbar sein.

Das Gehäuse kann eine verkehrsvorschriftenkonforme Beleuchtungseinrichtung aufweisen.

Dadurch kann das Gehäuse die Beleuchtungseinrichtung des Trägerfahrzeugs zumindest teilweise verdecken. Durch die Beleuchtungseinrichtung kann das Gehäuse im Straßenverkehr sicher mit dem Trägerfahrzeug transportiert werden.

Es wird ein Verkehrsüberwachungssystem mit Gehäuse gemäß Hauptanspruch

Eine Energieversorgung des Verkehrsüberwachungssystems kann über die Befestigungsschnittstelle erfolgen. Hierzu kann das Verkehrsüberwachungsgerät mit einer Energieversorgungsschnittstelle für das Verkehrsüberwachungsgerät ausgestattet sein, die ausgebildet ist, um die Energieversorgung des Verkehrsüberwachungsgeräts über eine Aufnahmeeinrichtung oder eine der Aufnahmeeinrichtung zugeordnete Energieversorgungsschnittstelle eines Trägerfahrzeugs vorzunehmen. Dadurch ist im Gehäuse keine Batterie erforderlich.

Das Gehäuse kann eine Fahrradattrappe aufweisen. Die Fahrradattrappe kann zur Tarnung des Verkehrsüberwachungssystems dienen.

Ausführungsbeispiele des hier vorgestellten Ansatzes sind in den Zeichnungen dargestellt und in der nachfolgenden Beschreibung näher erläutert. Es zeigt:
Fig. 1 eine Darstellung eines mobilen Verkehrsüberwachungssystems gemäß einem Ausführungsbeispiel; und
Fig. 2 eine Darstellung eines an einem Trägerfahrzeug angebauten mobilen Verkehrsüberwachungssystems gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

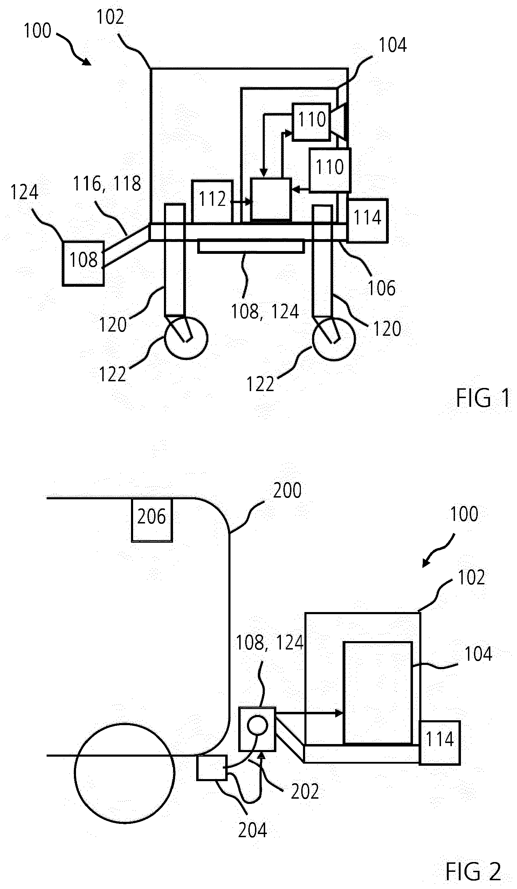

Fig. 1 zeigt eine Darstellung eines mobilen Verkehrsüberwachungssystems 100 gemäß einem Ausführungsbeispiel. Das Verkehrsüberwachungssystem 100 weist ein wetterfestes Gehäuse 102 und ein in dem Gehäuse 102 angeordnetes Verkehrsüberwachungsgerät 104 auf. Das Gehäuse 102 ist auf einem Träger 106 angeordnet. Der Träger 106 kann über eine Befestigungsschnittstelle 108 mit einem Trägerfahrzeug verbunden werden. Der Träger 106 kann in das Gehäuse 102 integriert sein. Das Gehäuse 102 ist kastenförmig und umschließt das Verkehrsüberwachungsgerät 104. Das Gehäuse 102 ist wie ein Gepäcktransportkoffer ausgeführt. Dazu kann der Gepäcktransportkoffer 102 an der Oberseite einen Deckel aufweisen, so dass er schnell und einfach geöffnet und verschlossen werden kann. Alternativ kann das als Gepäcktransportkoffer ausgebildete Gehäuse 102 ein Bodenelement und ein Deckelelement aufweisen. Das Bodenelement kann über lösbare Befestigungselemente mit dem Deckelement verbunden sein. Somit kann der Gepäcktransportkoffer ebenfalls schnell und einfach geöffnet und verschlossen werden. Sensoren 110 des Verkehrsüberwachungsgeräts 104 sind innerhalb des Gehäuses 102 angeordnet. Eine Wand des Gehäuses 102 ist zumindest im Bereich des jeweiligen Sensors 110 transparent für dessen verwendete Wellenlänge. Beispielsweise ist die Wand im Bereich einer Kamera 110 lichtdurchlässig und im Bereich eines Radarsensors 110 radardurchlässig. Hier ist eine Energieversorgungseinrichtung 112 für das Verkehrsüberwachungsgerät 104, beispielsweise ein Akkumulator 112, in dem Gehäuse 102 angeordnet. Dadurch ist das Verkehrsüberwachungssystem 100 autark und kann an einem Messort abgesetzt von dem Trägerfahrzeug verwendet werden.

Das Gehäuse 102 weist eine zulassungsverordnungsgemäße Beleuchtungseinrichtung 114 auf. Beispielsweise weist die Beleuchtungseinrichtung 114 für einen Transport hinter dem Trägerfahrzeug Rücklichter, wie Schlussleuchten, Bremsleuchten, Fahrtrichtungsanzeiger, Rückstrahler, Rückfahrscheinwerfer, Nebelschlussleuchten auf. Alternativ oder ergänzend weist die Beleuchtungseinrichtung 114 für einen Transport vor dem Trägerfahrzeug Frontleuchten für Standlicht, Abblendlicht, Fernlicht und Fahrtrichtungsanzeige auf. Weiterhin kann die Beleuchtungseinrichtung 114 ein Kennzeichen mit einer Kennzeichenbeleuchtung umfassen.

In einem Ausführungsbeispiel ist zwischen der Befestigungsschnittstelle 108 und dem Träger 106 eine Höhenverstellungseinrichtung 116 angeordnet. Über die Höhenverstellungseinrichtung 116 kann eine Relativposition der Befestigungsschnittstelle 108 zu dem Gehäuse 102 eingestellt werden. Beispielsweise kann die Befestigungsschnittstelle 108 angehoben werden, um die Befestigungsschnittstelle 108 zum Ankoppeln an dem Trägerfahrzeug zu positionieren. Ebenso kann das angekoppelte Gehäuse 102 relativ zum Trägerfahrzeug angehoben werden, um in einer Transportposition angeordnet zu werden. Am Messort kann das Gehäuse 102 in einer Messposition positioniert werden. Beispielsweise kann das Gehäuse 102 höher als ein Hindernis angehoben werden.

Alternativ oder ergänzend zu der Höhenverstellungseinrichtung 116 ist zwischen der Befestigungsschnittstelle 108 und dem Gehäuse 102 eine Schwenkeinrichtung 118 angeordnet. Durch die Schwenkeinrichtung 118 kann das Verkehrsüberwachungsgerät 104 mit dem Gehäuse 102 zumindest in einer Achse gegenüber der Befestigungsschnittstelle 108 beziehungsweise dem Trägerfahrzeug verschwenkt werden.

In einem Ausführungsbeispiel weist das Gehäuse 102 höhenverstellbare Füße 120 auf. Die Füße 120 können abgesenkt werden, um das Verkehrsüberwachungssystem 100 abzusetzen. Während des Transports mit dem Trägerfahrzeug sind die Füße 120 angehoben.

Das Gehäuse 102 kann Transportrollen 122 aufweisen. Auf den Transportrollen 122 kann das Verkehrsüberwachungssystem 100 in abgesetztem Zustand an den Messort gerollt werden. Hier sind die Transportrollen 122 an den Füßen 120 angeordnet. Dadurch können die Transportrollen 122 für den Transport mit dem Trägerfahrzeug angehoben werden.

In einem Ausführungsbeispiel weist die Befestigungsschnittstelle 108 eine Aufnahmeeinrichtung 124 für eine Anhängerkupplung des Trägerfahrzeugs auf. Das Gewicht des Verkehrsüberwachungssystems 100 wird dabei analog zu einem Heckträger für Fahrräder auf der Anhängerkupplung abgestützt.

Die Aufnahmeeinrichtung 124 kann austauschbar sein. Beispielsweise kann eine andere Aufnahmeeinrichtung 124 dazu ausgebildet sein, an einer Anbauplatte oder einem Geräteträger eines Kommunalfahrzeugs befestigt zu werden. Damit kann das Verkehrsüberwachungssystem 100 an einer Fahrzeugfront oder einem Fahrzeugheck des Trägerfahrzeugs angeordnet werden.

Ebenso kann eine weitere Aufnahmeeinrichtung 124 dazu ausgebildet sein, in ein Gewinde für eine Abschleppöse des Trägerfahrzeugs eingeschraubt zu werden. Eine weitere Aufnahmeeinrichtung 124 kann dazu ausgebildet sein, mit einer Aufnahme für einen Schneepflug oder eine abnehmbare Anhängerkupplung verbunden zu werden.

In einem Ausführungsbeispiel weist das Gehäuse 102 eine weitere Befestigungsschnittstelle 108 auf. Hier ist die weitere Aufnahmeeinrichtung 124 dazu ausgebildet, mit einer Dachträgerschnittstelle des Trägerfahrzeugs verbunden zu werden. Dadurch kann das Verkehrsüberwachungssystem 100 auch auf dem Trägerfahrzeug angeordnet werden.

Mit anderen Worten ist ein Messsystem auf einen einfachen Träger 106 beziehungsweise Halter 106 montiert, der auf der Anhängerkupplung aufsetzbar ist.

Dabei kann ein im Straßenverkehr bereits zugelassenes System für die Montage auf der Anhängerkupplung verwendet werden. Die Messelektronik 104 und gegebenenfalls die Energieversorgung 112 können auf diesen Träger 106 aufgebaut werden. Der Normstecker der Anhängerkupplung verfügt über eine Spannungsversorgung und Anschlüsse zur Beleuchtung, sodass aus dieser Energiequelle auch die Versorgung des Messsystems vorgenommen werden kann. Dadurch ergibt sich eine sehr schnelle und kostengünstige Installation des Messsystems.

Der Träger 106 ist in einer Ausführungsform absenkbar. Optional sind Transportrollen 122 am Träger 106 beziehungsweise dem Gehäuse 102 integrierbar. Das Gehäuse 102 kann als Box 102 bezeichnet werden. Die Transportrollen 122 können wie ein drittes Rad am Wohnwagen höhenverstellbar sein, damit ein leichtes Handling des Verkehrsüberwachungssystems 100 beziehungsweise der Anordnung 100 gewährleistet ist.

Das Verkehrsüberwachungsgerät 104 kann in verschiedenen Varianten beispielsweise zum Erfassen und Dokumentieren von Geschwindigkeitsverstößen, Rotlichtverstößen, Mautverstößen, Abbiegeverstößen oder Abstandsverstößen verwendet werden und komplett in der Anordnung/Kiste 102 integriert sein. Ebenso kann das Verkehrsüberwachungsgerät 104 teilintegriert sein, wobei die Batterie 112 auch im Auto aufbewahrt werden kann. Der Strom für die Versorgung des Verkehrsüberwachungsgeräts 104 beziehungsweise der Messeinheit 104 kann aus der Steckdose, welche üblicherweise zur Anhängerkupplung gehört, kommen. Zur Tarnung kann das Verkehrsüberwachungssystem 100 eine Fahrradattrappe aufweisen. Optional kann als Gehäuse 102 auch eine Dachbox verwendet werden. Dadurch kann ein Überraschungseffekt durch Kombination von bekannten Elementen erreicht werden.

Bei der Frontlösung besteht der Vorteil, dass von vorne gemessen werden kann und im Falle eines Überfalls die Beamten beziehungsweise Bediener direkt durchstarten könnten. Dabei kann der Transport über die hintere Anhängekupplung erfolgen. Nach dem Einparken in die Messposition erfolgt eine Absenkung des Trägers 106 auf die Transportrollen 122 und ein Verschieben über die Rollen 122 in den Frontbereich, wo das Verkehrsüberwachungssystem 100 an der vorderen Anhängerkupplung montiert wird und auf die Kupplung aufgebockt wird. Wenn keine eigene Energieversorgung 112 integriert ist, kann das Verkehrsüberwachungssystem 100 beziehungsweise die Messanordnung 104 an eine Steckdose des Trägerfahrzeugs angeschlossen werden. Dabei kann über eine Verlängerung zur hinteren Dose oder optional in einer vorderen Dose angeschlossen werden.

Fig. 2 zeigt eine Darstellung eines an ein Trägerfahrzeug 200 angebauten mobilen Verkehrsüberwachungssystems 100 gemäß einem Ausführungsbeispiel. Das Verkehrsüberwachungssystem 100 entspricht dabei im Wesentlichen dem Verkehrsüberwachungssystem in Fig. 1. Die Aufnahmeeinrichtung 124 der Befestigungsschnittstelle 108 ist hier zum Aufnehmen der Anhängerkupplung 202 des Trägerfahrzeugs 200 ausgebildet. Die Kugel der Anhängerkupplung 202 wird beispielsweise über einen Reibschluss oder einen Formschluss aufgenommen. Die Beleuchtungseinrichtung 114 und das Verkehrsüberwachungsgerät 104 werden über eine Anhängersteckdose 204 des Trägerfahrzeugs 200 mit elektrischer Energie versorgt. Das Verkehrsüberwachungssystem 100 kann ein geringes Gewicht aufweisen, da im Gehäuse 102 keine Batterie erforderlich ist. Wenn das Verkehrsüberwachungssystem 100 vom Trägerfahrzeug 200 abgesetzt aufgestellt wird, kann die Stromversorgung über ein Verlängerungskabel oder eine separate Energieversorgungseinrichtung erfolgen.

Das Trägerfahrzeug 200 weist hier eine Dachträgerschnittstelle 206 auf. Mit einer Aufnahmeeinrichtung für die Dachträgerschnittstelle 206 kann das Verkehrsüberwachungssystem 100 auch auf dem Dach des Trägerfahrzeugs 200 angeordnet werden. Auf dem Dach kann ein großer Erfassungsbereich überwacht werden.

Wenn das Verkehrsüberwachungssystem 100 angekoppelt ist, kann auch mobil beziehungsweise fahrend gemessen werden. In vom Fahrzeug entkoppelten Zustand benötigt das System 100 nur wenig Platz am Fahrbahnrand.

Mit anderen Worten zeigt Fig. 2 ein mobiles Messsystem, das auf der Standard Anhängerkupplung 202 wie ein Heckträger angeordnet ist. Das Messsystem weist dabei ein mobiles Verkehrsüberwachungsgerät 104 auf.

Der hier vorgestellte Ansatz kann einen teuren Umbau einer Scheibe und Bordelektronik für einen Fahrzeugeinbau ersetzen. Das ist insbesondere von Vorteil für geleaste Fahrzeuge 200, welche baulich nicht verändert werden sollen. Lediglich eine Standard-Anhängerkupplung 202 mit Steckdose 204 ist erforderlich und kann einfach nachgerüstet werden. Das autarke Messsystem ist kompakt und einfach im Handling. Beispielsweise können drei Transportrollen zur leichten Montage und zum Verschieben zum Messplatz angebaut werden, falls die Messung nicht direkt aus Montageposition erfolgen soll. Dadurch kann die Messung beispielsweise vor dem Fahrzeug 200 erfolgen. Bei der Montage auf der Anhängerkupplung 202 besteht im Gegensatz zu einem Anhänger keine Geschwindigkeitsbeschränkung.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verkehrsüberwachungssystem (100) mit einem Gehäuse (102), wobei ein mobiles Verkehrsüberwachungsgerät (104) mit Sensoren (110) in dem Gehäuse angeordnet ist, wobei eine Wand des Gehäuses zumindest im Bereich des jeweiligen Sensors transparent für dessen verwendete Wellenlänge ist, wobei das Gehäuse (102) über eine Befestigungsschnittstelle (108) mit einem Trägerfahrzeug (200) koppelbar ist und wobei das Gehäuse als Gepäcktransportkoffer (102) ausgeführt ist und wobei höhenverstellbare Füße (120) und Transportrollen (122) vorgesehen sind und die Transportrollen an den höhenverstellbaren Füßen (120) angeordnet sind, wobei die Befestigungsschnittstelle eine Aufnahmeeinrichtung für eine Anhängerkupplung des Trägerfahrzeugs aufweist, **dadurch gekennzeichnet, dass** die Aufnahmeeinrichtung für einen Formschluss und/oder Reibschluss zu einem genormten Kugelkopf der Anhängerkupplung ausgebildet ist.

2. Verkehrsüberwachungssystem (100) gemäß einem der vorhergehenden Ansprüche, bei dem die Befestigungsschnittstelle (108) eine Aufnahmeeinrichtung (124) für eine Dachträgerschnittstelle (206) des Trägerfahrzeugs (200) aufweist.

3. Verkehrsüberwachungssystem (100) gemäß einem der vorhergehenden Ansprüche, bei dem die Befestigungsschnittstelle (108) eine Aufnahmeeinrichtung (124) für eine Anbaueinrichtung des Trägerfahrzeugs (200) aufweist.

4. Verkehrsüberwachungssystem (100) gemäß einem der vorhergehenden Ansprüche, bei dem zwischen der Befestigungsschnittstelle (108) und dem Gehäuse (102) eine Höhenverstellungseinrichtung (116) angeordnet ist.

5. Verkehrsüberwachungssystem (100) gemäß einem der vorhergehenden Ansprüche, bei dem zwischen der Befestigungsschnittstelle (108) und dem Gehäuse (102) eine Schwenkeinrichtung (118) angeordnet ist.

6. Verkehrsüberwachungssystem (100) gemäß einem der vorhergehenden Ansprüche, mit einer verkehrsvorschriftenkonformen Beleuchtungseinrichtung (114).

7. Verkehrsüberwachungssystem (100) gemäß einem der vorhergehenden Ansprüche, mit einer Fahrradattrappe.

8. Verkehrsüberwachungssystem (100) gemäß einem der vorhergehenden Ansprüche, mit einer Energieversorgungsschnittstelle für das Verkehrsüberwachungsgerät (104), die ausgebildet ist, um die Energieversorgung des Verkehrsüberwachungsgeräts (104) über eine Aufnahmeeinrichtung (124) oder eine der Aufnahmeeinrichtung (124) zugeordnete Energieversorgungsschnittstelle (204) eines Trägerfahrzeugs (200) vorzunehmen.

## Claims

1. A traffic monitoring system (100) with a housing (102), wherein a mobile traffic monitoring device (104) with sensors (110) is arranged in the housing; wherein a wall of the housing is transparent to the wavelength used by the respective sensor at least in the region of the sensor; wherein the housing (102) can be coupled to a carrier vehicle (200) via a fastening interface (108); and wherein the housing is executed as a baggage transport case (102); and wherein height-adjustable feet (120) and transport rollers (122) are provided, and the transport rollers are arranged on the height-adjustable feet (120); wherein the fastening interface has a receiving device for a trailer coupling of the carrier vehicle; **characterized in that** the receiving device is designed for a positive fit and/or a friction fit to a standardized ball head of the trailer coupling.

2. The traffic monitoring system (100) according to one of the preceding claims, wherein the fastening interface (108) has a receiving device (124) for a roof rack interface (206) of the carrier vehicle (200).

3. The traffic monitoring system (100) according to one of the preceding claims, wherein the fastening interface (108) has a receiving device (124) for an attachment device of the carrier vehicle (200).

4. The traffic monitoring system (100) according to one of the preceding claims, given which a height adjustment device (116) is arranged between the fastening interface (108) and the housing (102).

5. The traffic monitoring system (100) according to one of the preceding claims, given which a pivot device (118) is arranged between the fastening interface (108) and the housing (102).

6. The traffic monitoring system (100) according to one of the preceding claims, with a lighting device (114) that is compliant with traffic regulations.

7. The traffic monitoring system (100) according to one of the preceding claims, with a fake bicycle.

8. The traffic monitoring system (100) according to one of the preceding claims, having a power supply interface for the traffic monitoring device (104), which is configured to provide power to the traffic monitoring device (104) via a receiving device (124) or a power supply interface (204) of a carrier vehicle (200), said power supply interface (204) being associated with the receiving device (124).

## Revendications

1. Système de surveillance du trafic (100) comprenant un boîtier (102), un appareil mobile de surveillance du trafic (104) comprenant des capteurs (110) étant disposé dans le boîtier, une paroi du boîtier étant, au moins dans la zone du capteur respectif, transparente pour la longueur d'onde utilisée de celui-ci, le boîtier (102) pouvant être couplé à un véhicule porteur (200) à travers une interface de fixation (108) et le boîtier étant conçu comme un coffre de transport de bagages (102) et des pieds (120) réglables en hauteur et des roues de transport (122) étant prévus et les roues de transport étant disposées sur les pieds (120) réglables en hauteur, l'interface de fixation présentant un dispositif de réception pour un attelage de remorque du véhicule porteur, **caractérisé en ce que** le dispositif de réception est conçu pour une liaison par complémentarité de forme et/ou une liaison par friction avec une tête sphérique standard de l'attelage de remorque.

2. Système de surveillance du trafic (100) selon l'une quelconque des revendications précédentes, dans lequel l'interface de fixation (108) présente un dispositif de réception (124) pour une interface de galerie de toit (206) du véhicule porteur (200).

3. Système de surveillance du trafic (100) selon l'une quelconque des revendications précédentes, dans lequel l'interface de fixation (108) présente un dispositif de réception (124) pour un dispositif de montage du véhicule porteur (200).

4. Système de surveillance du trafic (100) selon l'une quelconque des revendications précédentes, dans lequel un dispositif de réglage de hauteur (116) est disposé entre l'interface de fixation (108) et le boîtier (102).

5. Système de surveillance du trafic (100) selon l'une quelconque des revendications précédentes, dans lequel un dispositif de pivotement (118) est disposé entre l'interface de fixation (108) et le boîtier (102).

6. Système de surveillance du trafic (100) selon l'une quelconque des revendications précédentes, comprenant un dispositif d'éclairage (114) conforme aux règles de circulation.

7. Système de surveillance du trafic (100) selon l'une quelconque des revendications précédentes, comprenant une réplique de bicyclette.

8. Système de surveillance du trafic (100) selon l'une quelconque des revendications précédentes, comprenant une interface d'approvisionnement énergétique pour l'appareil de surveillance du trafic (104), laquelle est conçue pour effectuer l'approvisionnement énergétique de l'appareil de surveillance du trafic (104) à travers un dispositif de réception (124) ou une interface d'approvisionnement énergétique (204) d'un véhicule porteur (200) associée au dispositif de réception (124).
